Europäisches Patentamt

European Patent Office

Office européen des brevets

(19)

(11) Veröffentlichungsnummer: **0 155 599 B1**

(12) **EUROPÄISCHE PATENTSCHRIFT**

(45) Veröffentlichungstag der Patentschrift: 25.09.91

(51) Int. Cl.5: **H01Q 1/42**, B32B 27/12

(21) Anmeldenummer: 85102577.5

(22) Anmeldetag: 07.03.85

(54) **Radomwerkstoff.**

(30) Priorität: 22.03.84 DE 3410501

(43) Veröffentlichungstag der Anmeldung:
25.09.85 Patentblatt 85/39

(45) Bekanntmachung des Hinweises auf die
Patenterteilung:
25.09.91 Patentblatt 91/39

(84) Benannte Vertragsstaaten:
DE FR GB IT

(56) Entgegenhaltungen:
GB-A- 1 357 003
US-A- 3 002 190
US-A- 3 616 140

(73) Patentinhaber: **DORNIER GMBH**
**Postfach 1420**
**W-7990 Friedrichshafen 1(DE)**

(72) Erfinder: **Schröder, Hans-Wolfgang, Dr.**
**Kupferbergstrasse 27**
**W-7759 Immenstaad-Kippenhausen(DE)**

(74) Vertreter: **Landsmann, Ralf, Dipl.-Ing.**
**c/o DORNIER GMBH Postfach 1420**
**W-7990 Friedrichshafen 1(DE)**

## Beschreibung

Die Erfindung betrifft einen Radomwerkstoff für überschallschnelles Fluggerät nach dem Oberbegriff des Anspruchs 1.

Antennenabdeckungen (Radome) dienen zum Schutz von Antennen an Flugzeugen gegen Umwelteinflüsse. Radome müssen eine hohe Transparenz und geringe Verluste für Radarwellen im gesamten Betriebsfrequenzbereich besitzen, der hier insbesondere Frequenzen oberhalb von 10 GHz umfasst. Sie müssen außerdem die lagebedingten aerodynamischen Kräfte aufnehmen können und eine hinreichend hohe Regen-Erosionsbeständigkeit, Schlagfestigkeit sowie eine hinreichend hohe Beständigkeit gegenüber durch die aerodynamische Erwärmung auftretenden Temperaturen aufweisen.

Radome dieser Art werden im allgemeinen aus faserverstärkten Duroplasten hergestellt, z.B. aus E-Glasfaser verstärktem Epoxidharz. Mit duroplastischen Werkstoffen sind jedoch nicht alle Anforderungen erfüllbar. Begrenzend sind insbesondere hohe Dielektrizitätskonstanten und hohe dielektrische Verluste der duroplastischen Werkstoffe, sowie die Notwendigkeit einer Regen-Erosionsschutzschicht, durch die zusätzliche Verluste eingebracht werden. Die Begrenzungen machen sich mit wachsender Radarfrequenz (z.B. 10 - 80 GHz) zunehmend bemerkbar, und zwar insbesondere in Fällen, in denen eine breitbandige Transmissionscharakteristik gefordert ist, wie z.B. bei radaroptisch dünnwandigen Radomen, das heißt bei Radomen, bei denen die radaroptische Dicke ( = geometrische Dicke x Wurzel aus der relativen Dielektrizitätskonstanten) typischerweise kleiner ist als 1/20 der Vakuumwellenlänge der Radarstrahlung. Außerdem begrenzen die durch den duroplastischen Werkstoff sowie durch die Regen-Erosionsschutzschicht eingebrachten Verluste die Leistung der Radarstrahlung, die ohne unzulässig hohe Erwärmung des Radoms transmittiert werden kann. Dieser Gesichtspunkt ist z.B. für militärische Störradarsysteme von Bedeutung.

Aus der **US-A 3,616,140** ist ein Radom bekannt, das aus einer Tragschicht aus einem endlosfaserverstärkten Verbundwerkstoff und einer äußeren Schicht hoher Regen-Erosionsbeständigkeit, z.B. aus Polyethylen oder ultrahochmolekularem Polyethylen besteht. Als Matrixmaterial für die Tragschicht sind ausschließlich Duroplaste vorgeschlagen, als Werkstoffe für die äußere Schicht Thermoplaste.

Aus der **GB-A 1 357 003** ist ein Radom in Sandwich-Bauweise bekannt, dessen Kern syntaktischer Schaum und dessen Deckschichten glasfaserverstärkte Laminate sind.

Aus der **US-A 3,002,190** ist ein Radom in Sandwich-Bauweise bekannt, dessen Kern aus Schaum besteht und dessen Deckschichten faserverstärkte Laminate sind.

Aufgabe der Erfindung ist es, einen Werkstoff für Radome an Fluggeräten vorzuschlagen, der regen-erosionsbeständig ist.

Diese Aufgabe wird erfindungsgemäss von Werkstoffen mit den in den Ansprüchen genannten Merkmalen gelöst.

Erfindungsgemäss ist die Funktion des Tragens (der Struktur) von der Funktion des Schutzes vor Umwelteinflüssen getrennt. Die erfindungsgemässen Radomwerkstoffe bestehen aus mindestens zwei Schichten, von denen die innere selbst ein faserverstärkter Schichtstoff ist, der trägt, und die äussere Schicht einen Regen-Erosionsschutz bildet.

Vorteilhaft für den Unterschallbereich ist ein Verbund, bestehend aus einer tragenden Struktur aus faserverstärktem ultrahochmolekularen Polyethylen (UHMPE) und einer Aussenschicht aus unverstärktem UHMPE. Das Material UHMPE wird verwendet, weil es bei geringen dielektrischen Verlusten und kleiner Dielektrizitätskonstante eine hohe Regen-Erosionsbeständigkeit besitzt. Wie im Beispiel eines militärischen ECM-Radoms (ECM = Electronic Counter Measures) nachgewiesen werden konnte, lassen sich mit diesem Werkstoff für radaroptisch dünne Radome die Forderung nach Verlustarmut und Breitbandigkeit (10-20 GHz) sowie nach struktureller Festigkeit und Regen-Erosionsbeständigkeit besser erfüllen, als dies bei den derzeit verfügbaren duroplastischen Radomwerkstoffen mit Regen-Erosionsschutzschicht auf Polyurethanbasis möglich ist.

Ausser auf die dielektrischen sowie die Erosions-Eigenschaften ist auch darauf zu achten, dass das Matrixmaterial der faserverstärkten tragenden Struktur einfach zu verstärken ist. Günstiger als ultrahochmolekulares Polyethylen (UHMPE) sind in dieser Hinsicht hochmolekulare Polyethylene (PE) mit gegenüber UHMPE geringerer Schmelzviskosität.

Mit solchen Verbundwerkstoffen lassen sich die Herstellungskosten gegenüber Radomen mit tragender Struktur aus faserverstärktem UHMPE deutlich senken, da die Fertigungszeiten kürzer werden und da tiefgezogene oder geblasene Vorformlinge herstellbar sind. Auch die Witterungsbeständigkeit und die Regen-Erosionsbeständigkeit werden als Folge der kurzen Haltezeit bei hohen Temperaturen verbessert.

Als erosionsbeständige Aussenschicht eignet sich insbesondere ultrahochmolekulares Polyethylen (UHMPE). UHMPE würde bei höheren Fluggeschwindigkeiten zwar schmelzen, die Schmelzviskosität ist jedoch so hoch, dass ein merkliches Fliessen der typischerweise 0,3 bis 1,0 mm dicken Aussenschicht durch Luftreibungskräfte unwahrscheinlich ist. Zur Erhöhung der effektiven Viskosität kann das Material vernetzt werden, wobei allerdings gewisse Verschlechterungen der dielektrischen Eigenschaften in Kauf zu nehmen sind.

Als erosionsbeständige Aussenschicht geeignet ist ferner Polyether-Etherketon (PEEK). Zwar ist PEEK so temperaturstabil, dass Radome für den Geschwindigkeitsbereich bis ca. 2,5 Mach im Prinzip auch gänzlich aus faserverstärktem PEEK hergestellt werden können.

Vorteilhaft für die Stabilität ist die Verwendung von Endlosfasern der tragenden Struktur. Als Fasermaterial geeignet sind Glas- und Aramidfasern. Wegen geringer Dielektrizitätskonstanten besonders geeignet sind Quarzglas- und D-Glas-Fasern.

Die tragende Struktur kann außer als Vollmaterial auch als Sandwichmaterial ausgebildet werden.

Vorteilhaft zur Erhöhung der Steifigkeit bei nur wenig erhöhter effektiver radaroptischer Dicke ist z.B. eine Sandwich-Anordnung, bei der nur auf den beiden Deckseiten der tragenden Struktur Verstärkungsfasern angeordnet sind, während der Kern aus unverstärktem Kunststoff (UHMPE, PE) besteht. Ebenfalls einsetzbar sind Kerne aus syntaktischem Schaum, Hartschaum oder Wabenwerkstoff. Der syntaktische Schaum besteht z.B. aus einem Verbund des Kernmaterials als Matrix mit darin verteilten Hohlkugeln (z.B. aus Glas, Quarz oder duroplastischem Kunststoff).

Alle Verbundwerkstoffe, die Gegenstand der Erfindung sind, unterscheiden sich von Radomwerkstoffen mit duroplastischer Matrix vorteilhaft durch ihre höhere Schlagfestigkeit. Dies führt z.B. zu erhöhter Beständigkeit gegenüber Vogelschlag und aufgeschleudertem Rollbahnsplitt.

**Patentansprüche**

1. Radomwerkstoff für überschallschnelles Fluggerät, bestehend aus einer Tragschicht aus einem endlosfaserverstärkten Verbundwerkstoff und einer äußeren Schicht hoher Regen-Erosionsbeständigkeit aus Polyethylen, ultrahochmolekularem Polyethylen oder Polyether-Etherketon, **dadurch gekennzeichnet**, daß die Matrix der Tragschicht aus einem Thermoplasten, nämlich aus Polyethylen, ultrahochmolekularem Polyethylen oder Polyether-Etherketon besteht.

2. Radomwerkstoff nach Anspruch 1, **dadurch gekennzeichnet**, daß die Tragschicht einen Sandwich-Aufbau besitzt, das heißt zwei Deckschichten und einen dazwischen angeordneten Kern aufweist, wobei die Deckschichten aus endlosfaserverstärktem Polyethylen oder ultrahochmolekularem Polyethylen bestehen und der Kern aus Polyethylen oder ultrahochmolekularem Polyethylen geringerer Dichte und geringerer Dielektrizitätskonstante besteht.

3. Radomwerkstoff nach Anspruch 2, **dadurch gekennzeichnet**, daß der Kern aus unverstärktem Polyethylen oder ultrahochmolekularem Polyethylen besteht.

4. Radomwerkstoff nach einem der vorhergehenden Ansprüche, **dadurch gekennzeichnet**, daß sich zwischen der äußeren Schicht und der Tragschicht mindestens eine weitere Schicht befindet, die aus einem Glasgewebe oder aus einer thermoplastischen Folie besteht.

**Claims**

1. Radome material for supersonic aircraft, comprising a carrier layer of a filament-reinforced composite and an outer layer with high resistance to erosion by rain made of polyethylene, ultra-high molecular polyethylene or polyether-ether ketone, characterised in that the carrier layer matrix comprises a thermoplastic, namely polyethylene, ultra-high molecular polyethylene or polyether-ether ketone.

2. Radome material according to claim 1, characterised in that the carrier layer has a sandwich construction, i.e. it comprises two cover layers and a core disposed therebetween, wherein the cover layers comprise filament-reinforced polyethylene or ultra-high molecular polyethylene and the core comprises polyethylene or ultra-high molecular polyethylene with low density and low relative permittivity.

3. Radome material according to claim 2, characterised in that the core comprises non-reinforced polyethylene or ultra-high molecular polyethylene.

4. Radome material according to one of the preceding claims, characterised in that there is disposed between the outer layer and the carrier layer at least one further layer which comprises a glass cloth or a thermoplastic foil.

**Revendications**

1. Matériau pour radôme pour aéronef supersonique, comprenant une couche de support d'un matériau composite renforcé par des filaments continus et une couche extérieure de polyéthylène, de polyéthylène de très haut poids moléculaire ou de polyétheréther-cétone présentant une grande résistance à l'érosion par la pluie, **caractérisé en ce** que la matrice de la couche de support est constituée d'une matière thermoplastique, à savoir de polyéthylène, de polyéthylène de très haut poids moléculaire ou de polyétheréther-cétone.

2. Matériau pour radôme selon la revendication 1, caractérisé en ce que la couche de support présente une structure sandwich, c'est-à-dire deux couches extérieures avec un noyau placé entre les deux, les couches extérieures se composant de polyéthylène renforcé par des filaments continus ou de polyéthylène de très haut poids moléculaire, et que le noyau est constitué de polyéthylène ou de polyéthylène de très haut poids moléculaire d'une densité et d'une constante diélectrique plus faibles.

3. Matériau pour radôme selon la revendication 2, caractérisé en ce que le noyau est constitué de polyéthylène non renforcé ou de polyéthylène de très haut poids moléculaire.

4. Matériau pour radôme selon l'une des revendications précédentes, caractérisé en ce qu'entre la couche extérieure et la couche de support se trouve au moins une autre couche constituée d'un tissu de verre ou d'une feuille thermoplastique.